# EUROPEAN PATENT SPECIFICATION

(11) **EP 1 437 855 B1**
(45) Date of publication and mention of the grant of the patent: **30.05.2007**
(21) Application number: 02360382.2
(22) Date of filing: 30.12.2002
(51) Int. Cl.: H04L 1/20, H04B 10/08

(54) **Device and method of determining an eye diagram of a digital signal**
Vorrichtung und Verfahren zu einer Augenmustermessung von einem digitalen Signal
Appareil et procédé pour la détermination d'une figure en oeil d'un signal digital

(43) Date of publication of application: 14.07.2004
(73) Proprietor: Alcatel Lucent, 75008 Paris (FR)
(72) Inventor: Baumert, Wolfgang, 71707 Schwieberdingen (DE)
(74) Representative: Schmidt, Werner Karl

(56) References cited:
- US-A- 4 272 845
- US-A- 5 333 147
- US-A- 5 736 875
- US-A- 5 774 242
- ELLEMEYER, T., LANGMANN, U., WEDDING, B. AND PÖHLMANN, W. : "A 10-Gb/s Eye-Opening Monitor IC for Decision-Guided adaptation of the Frequency Response of an Optical Receiver" IEEE JOURNAL OF SOLID-STATE CIRCUITS, vol. 35, no. 12, December 2000 (2000-12), XP002247996

## Description

The present invention relates to a method of determining an eye diagram of a digital signal.

The present invention further relates to a method of controlling an eye width of an eye diagram of a digital signal, an eye monitor for determining an eye width of an eye diagram of a digital signal, and a receiver for receiving a digital signal.

In state-of-the-art communication systems, binary encoded information is usually sent from a transmitter to one or more receivers, wherein a transmission medium usually comprises copper cable, free space and optical fibre. A common goal of said digital communication systems is minimizing the bit error rate.

In order to achieve this goal, digital signal receivers comprise a so-called eye monitor with which a measure for the quality of a transmission channel can be determined. In particular, said eye monitor detects a vertical eye opening which carries information on additive noise, jitter and other adverse effects that affect the shape of the digital signal. Within optical transmission systems, additional errors of the signal shape are caused by polarization mode dispersion (PMD), chromatic distortion and the like.

Such state-of-the-art eye monitors are known from ELLEMEYER, T., LANGMANN, U., WEDDING, B. and PÖHLMANN, W.: 'A 10-Gb/s Eye-Opening Monitor IC for Decision-Guided adaption of the Frequency Response of an Optical Receiver' IEEE JOURNAL OF SOLID-STATE CIRCUITS, vol. 35, no. 12, December 2000 and from US-A-4 272 845 (FIUMANI FRANCESCO) 9 June 1981.

It is an object of the present invention to provide a method of determining an eye diagram of a digital signal, which allows for improved assessment of signal quality.

It is a further object of the present invention to provide an improved eye monitor and a receiver with an improved eye monitor.

According to the present invention, these objects are achieved by determining an eye width of said eye diagram. It has been found out that monitoring said eye width that is corresponding to an horizontal opening of said eye diagram, improves the overall quality of an analysis of a digital signal.

According to the present invention, said method is characterized by the following steps:
- obtaining a first phase difference information corresponding to a first phase difference between said digital signal and a clock signal associated to said digital signal,
- obtaining a second phase difference information corresponding to a second phase difference between said digital signal and said clock signal, and
- determining said eye width based on said first phase difference information and said second phase difference information.

Since in digital communication systems there is a need for synchronization between the digital signal which represents binary encoded data and the clock signal that provides a time base for electronic circuits processing said digital signal, an assessment of signal quality of said digital signal includes monitoring a phase difference between said digital signal and said clock signal.

In state of the art digital transmission systems, e.g. within a receiver, said clock signal is regenerated by analysing said data signal. A high or rapidly varying phase difference between said digital signal and said clock signal may lead to an increase of the bit error rate, because the digital signal is sampled at a wrong sample time within said receiver. According to the present invention, this is avoided by accurately assessing the eye width in the previously described manner.

According to the present invention, said first phase difference is is measured between said digital signal and a rising edge of said clock signal, said rising edge corresponding to a start of a bit time, and said second phase difference is measured between said digital signal and a falling edge of said clock signal, said falling edge corresponding to an end of said bit time. Such a measurement is very simple because it can e.g. be triggered by the rising/falling edge of the clock signal.

A very advanced method which is especially useful within digital systems having very high bit rates provides
- integrating in a first calculation cycle said first phase difference information of N many subsequent bits of said digital signal to obtain a first phase difference voltage, and, after said first calculation cycle,
- integrating in a second calculation cycle said second phase difference information of N further subsequent bits of said digital signal to obtain a second phase difference voltage.

Although it is possible to provide an exact value of a phase difference, it is often sufficient to monitor the sign of the phase difference, i.e. whether the digital signal precedes the clock signal or vice versa. This variant is referred to in the further description without any limitation of the scope of the present invention.

More specifically, said phase difference information can be represented by a binary value, wherein a value of "zero" e.g. denotes a state in which the digital signal precedes the clock signal and wherein a value of "one" denotes a state in which the clock signal precedes the digital signal.

That means, if during said first calculation cycle the digital signal always precedes the clock signal, this yields "zero" as a result of said integration which is equivalent to a corresponding first phase difference voltage of 0 Volts. Otherwise, if during said first calculation cycle the clock signal always precedes the digital signal, this yields N as a result of said integration which is equivalent to a corresponding first phase difference voltage of U_M Volts. Consequently, if the average phase difference is about zero, said integration within said first calculation cycle yields N/2 which corresponds to a phase difference voltage of U_M / 2 Volts.

Said second phase difference voltage is determined the same way as is said first phase difference voltage. Hence, it is possible to obtain said first phase difference voltage and said second phase difference voltage by using only one phase detection means. In this case, depending on a trigger condition for the measurement of the phase difference, it may be necessary to cyclically invert said clock signal every N bits to create a proper trigger condition e.g. for obtaining said second phase difference voltage. Said integration is preferably performed by an RC-circuit which is easy to implement for the typical frequency range of the digital signal up to 100 GHz.

Simulations show that the number N can be chosen large enough so as to enable state-of-the-art micro-controllers to evaluate the first and second phase difference voltage after the corresponding calculation cycle, i.e. a further processing of said first phase difference voltage and said second phase difference voltage can easily be performed with standard components.

Apart from that, the number N of subsequent bits processed can be changed during operation of a digital transmission system.

According to a further advantageous embodiment of the present invention, an eye width voltage is determined based on said first phase difference voltage and on said second phase difference voltage, in particular based on a difference between said first phase difference voltage and said second phase difference voltage, said eye width voltage corresponding to said eye width of said eye diagram.

The method according to the present invention is not limited to optical transmission of digital signals. Cable- or radio-based digital signal transmission systems can use the method, too, for obtaining an eye width.

According to a further very advantageous embodiment of the present invention, said first phase difference information and/or said second phase difference information are controllably delayed, preferably by a multiple of a/said bit time. A controllable delay allows for compensation of the time delay between the first N subsequent bits and the second N subsequent bits. This may be desirable when processing said first and said second phase difference information at the same time.

According to another advantageous embodiment of the present invention, said first phase difference information and/or said second phase difference information and/or a bit value information, which is preferably obtained by a decision gate, and/or a phase difference information selection signal are combined, preferably by means of a combinatoric network according to a predefined scheme, and in that an output of said combinatoric network is integrated in said first and/or said second calculation cycle. The combinatoric network e.g. controls the number N of subsequent bits to be analysed within each of said two calculation cycles.

A further solution to the object of the present invention is given by a method of controlling an eye width of an eye diagram of a digital signal, comprising the method of determining said eye diagram according to the invention and comprising a step of adjusting a phase of said clock signal, said adjustment of said phase of said clock signal depending on said eye width. By adjusting the phase of the clock signal, it is possible to influence the eye width i.e. the eye width can e.g. be maximised depending on the phase adjustment. This, in turn, results in a lower bit error rate.

A very advantageous embodiment of the present invention is characterized in that said eye width is used by computation means that control phase adjustment means, preferably electronic phase adjustment means, for said phase adjustment, which provides a very flexible possibility of e.g. minimising the bit error rate. It is also possible to store eye width values within said computer for a predetermined period of time to gather information about the transmission quality of the digital signal.

Another very advantageous embodiment of the present invention uses said eye width for controlling transmission control means, such as polarization mode dispersion (PMD)-mitigation means and the like, which controllably influence electrical and/or optical characteristics of an electrical/optical transmission line that is used for transmitting said digital signal so as to reduce or compensate, respectively, adverse effects deteriorating the digital signal during transmission.

A further very sophisticated variant of the method of the present invention is characterized by deriving time jitter information of said digital signal by means of
- analysing a relation between said eye width and a phase difference between said clock signal and said digital signal, and
- obtaining time jitter information from a gradient of said eye width with respect to said phase difference and/or from said eye width.

The phase difference can be changed stepwise by e.g. using the aforementioned phase adjustment means, wherein for each phase step the eye width is measured. At a distinct, optimum value of the phase difference, a maximum eye width will be detected. The gradient of said eye width as a function of said phase difference contains information about time jitter.

A further solution to the object of the present invention is represented by an eye monitor for determining an eye width of an eye diagram of a digital signal. According to the invention, the eye monitor comprises:
- phase detection means for obtaining a first phase difference information and a second phase difference information between said digital signal and a clock signal associated to said digital signal,
- integration means for integrating said first phase difference information and said second phase difference information to obtain a first phase difference voltage and a second phase difference voltage,
- computation means for determining an eye width voltage based on said first phase difference voltage and on said second phase difference voltage, in particular based on a difference between said first phase difference voltage and said second phase difference voltage, said eye width voltage corresponding to said eye width of said eye diagram.

An advantageous embodiment of said eye monitor according to the present invention further comprises phase adjustment means for adjusting a phase of said clock signal. Preferably, said phase adjustment means are of the electric type.

Yet a further solution to the object of the present invention is given by a receiver for receiving a digital signal, characterized by being capable of performing a method according to the invention. The receiver preferably comprises an eye monitor according to the present invention.

Further embodiments, features and details of the present invention are explained in the following detailed description with reference to the drawings, wherein
- Figure 1: shows an eye diagram,
- Figure 2a: shows a clock signal of a digital transmission system,
- Figure 2b: shows a rising edge of a digital signal,
- Figure 2c: shows a falling edge of said digital signal of Figure 2b,
- Figure 3: shows a block diagram of a digital signal receiver according to the present invention,
- Figure 4: shows a schematic drawing of an eye monitor according to the invention,
- Figure 5: shows a block diagram of a method according to the present invention, and
- Figure 6: shows two sequences of subsequent bits of said digital signal.

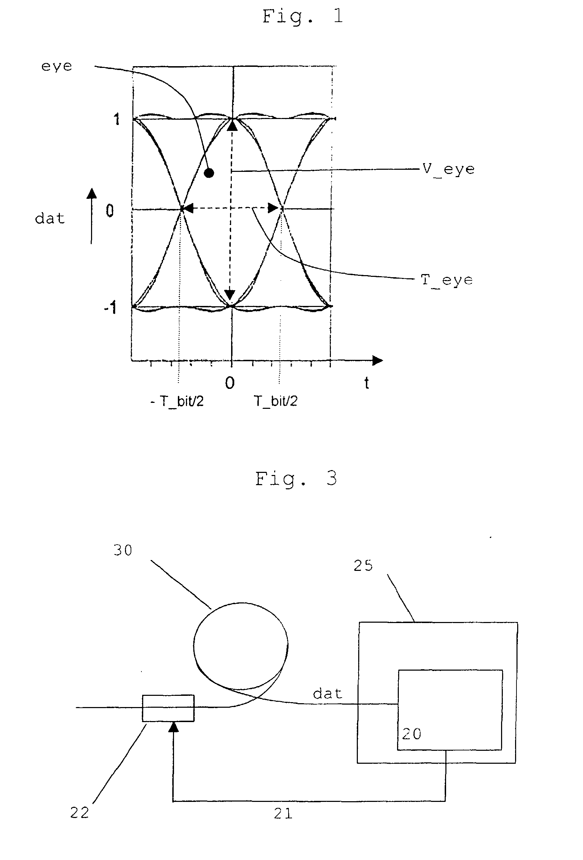

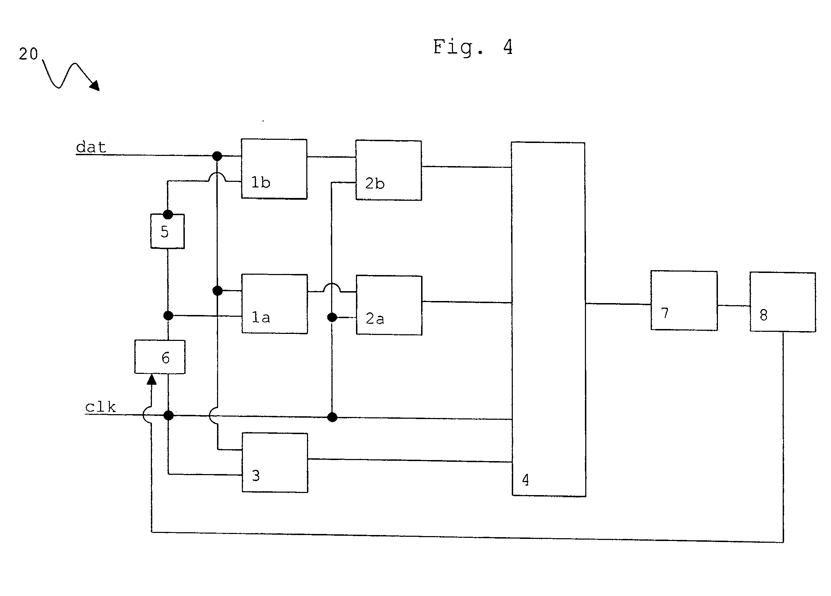

The eye diagram of Figure 1 comprises an eye that is characterized by an eye width T_eye, which corresponds to a horizontal opening of said eye, and by a vertical eye opening V_eye. Said eye diagram is used in digital transmission systems, an example of a receiver portion of which is shown in Figure 3, to assess the quality of a digital signal dat (Fig. 1, 3) which is transmitted over a transmission line 30 (Fig. 3). Although the following description is not limited to optical digital transmission systems, the transmission line 30 shown in Figure 3 is an optical fibre.

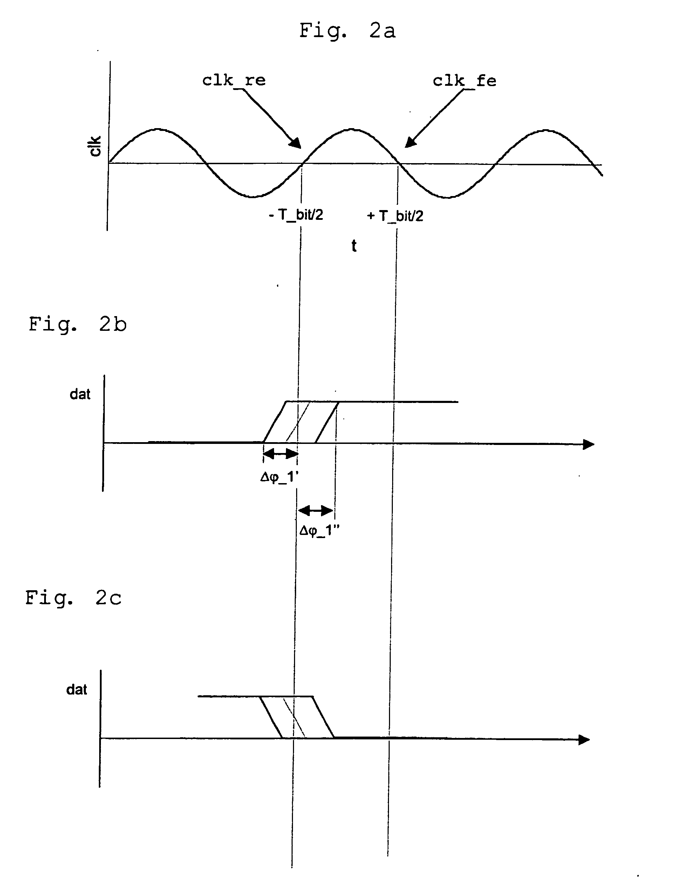

In a receiver 25 of said transmission system, said digital signal dat is converted from an optical signal to an electrical signal, and a clock signal clk (Fig. 2a) is associated to said digital signal dat. Said clock signal clk determines a sample time used for evaluating said digital signal dat within said receiver 25 of Figure 3. A phase difference between said digital signal dat and said clock signal clk consequently affects the sample time and can thus contribute to an increase of the bit error rate of a receiving process, which is to be avoided.

A poor signal quality of said digital signal dat can be derived from a small eye opening that is due to a small eye width T_eye and/or a small vertical opening V_eye of said eye. A large value of the eye width T_eye and/or the vertical opening V_eye of the eye indicates a good signal quality of said digital signal dat. Both the vertical opening V_eye and the eye width T_eye can be optimised by adjusting the phase difference mentioned above. However, the present invention puts an emphasis to maximising the eye width T_eye.

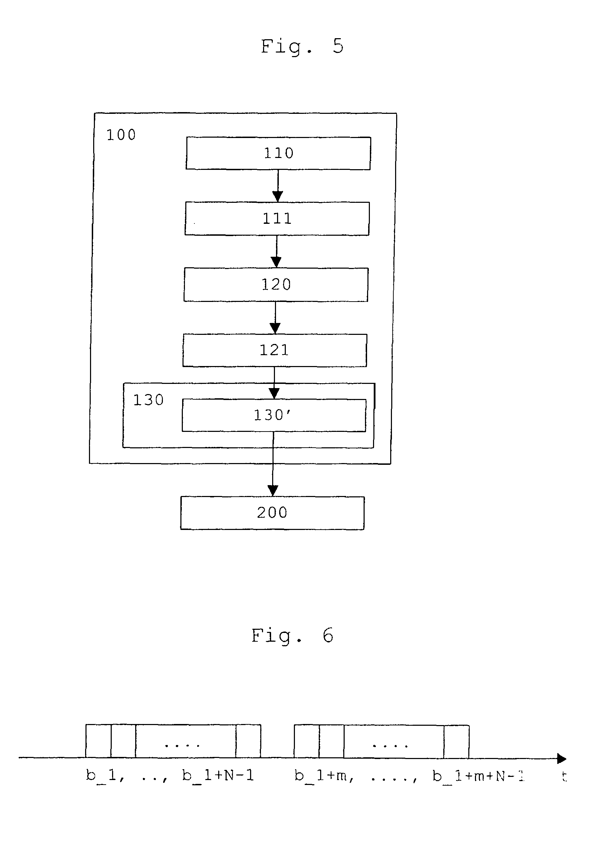

To achieve this object, the receiver 25 is equipped with an eye monitor 20 for obtaining said eye width T_eye of said eye diagram (Fig. 1) which is indicated by step 100 of Figure 5. A schematic drawing of said eye monitor 20 is shown in Figure 4.

The eye monitor 20 comprises first and second phase detection means 1a and 1b, both of which receive the digital signal dat as input signal. Said first phase detection means 1a receive the clock signal clk, which is associated to said digital signal dat, as a further input signal. The clock signal clk can be influenced by phase adjustment means 6 which are described in detail further below. Said second phase detection means 1b receive an inverted clock signal that is obtained from inverting said clock signal clk by means of an inverter 5 as a further input signal.

Both phase detection means 1a and 1b are operating in the same way. Therefore, phase detection means operation is described with respect to said first phase detection means 1a and can be transferred to said second phase detection means 1b hereafter without any constraints.

As already mentioned, said first phase detection means 1a receive said digital signal dat and said clock signal clk as input signals. A detailed drawing of the clock signal clk is presented in Figure 2a. Additionally, an exemplary portion of the digital signal dat is shown in Figure 2b. More precisely, said exemplary portion of the digital signal dat shown in Figure 2b represents a low-to-high transition of the digital signal dat.

At its output, the first phase detection means 1a outputs a first phase difference information which represents a phase difference between said input signals, i.e. between said digital signal dat and said clock signal clk. In the block diagram of Figure 5, obtaining said first phase difference information is represented by step 110.

The first phase difference information is binary coded and contains within one bit the information about whether the clock signal clk precedes the digital signal dat or vice versa. In Figure 2b, three corresponding cases with respect to the phase difference between said clock signal clk and said digital signal dat are shown.

In the first case, the digital signal dat precedes the clock signal clk, since there is a phase difference of Δϕ_1' between a rising edge clk_re of the clock signal clk (Fig. 2a) and the digital signal dat. In the second case, the clock signal clk precedes the digital signal dat, since there is a phase difference of Δϕ_1'' between the rising edge clk_re of the clock signal clk and the digital signal dat. The third case is indicated by a dashed line with the low-to-high transition of the digital signal dat corresponding to the instant designated -T_bit/2 within Figure 2a. In said third case, there is virtually no phase difference between the clock signal clk and the digital signal dat.

If the digital signal dat precedes the clock signal clk, the first phase difference information which is output by said first phase detection means 1a has the value "zero". Otherwise, if the clock signal clk precedes the digital signal dat, said first phase difference information has the value "one". The third case, i.e. if there is no phase difference between said digital signal dat and said clock signal clk, is characterized by statistically yielding the same number of "zero"-values and "one"-values for a plurality of measurements.

Since the left eye boundary of the eye diagram (Figure 1) is defined by a plurality of rising and falling edges, the phase measurements within said first phase detection means described above are not only conducted for low-to-high transitions of the digital signal dat but also for high-to-low transitions of the digital signal dat, one of which is indicated by the exemplary portion of the digital signal dat shown in Figure 2c. For such a high-to-low transition, the output values of the first phase detection means 1a are of the same type as with the previously described low-to-high transitions of the digital signal dat.

The operation of the second phase detection means 1b is highly similar. The only difference consists in the reference time which is used for calculating a phase difference. This reference time is +T_bit/2, i.e. in contrast to said first phase detection means 1a it corresponds with a falling edge clk_fe of the clock signal clk. Nevertheless, the structure of the second phase detection means 1b need not be changed as compared to the first phase detection means 1a since the clock signal clk is inverted by the inverter 5 of Figure 4 which turns a falling edge clk_fe of said clock signal clk into a rising edge clk_re and vice versa.

Altogether, the first phase difference information obtained by said first phase detection means 1a is related to the left boundary of the eye of Figure 1, and the second phase difference information obtained by said second phase detection means 1b within step 120 (Figure 5) is related to the right boundary of the eye.

The phase detection is done sequentially, i.e. for a predefined number N of subsequent bits b_1, .., b_1+N-1 (cf. Figure 6), which defines a first calculation cycle, the first phase difference information is obtained which results in a number N of phase difference information items that can have a value of "zero" or "one" in accordance with the above explanations. These N phase difference information items are integrated in step 111 of Figure 5 within the integration means 7 of Figure 4, which results in a first phase difference voltage U_Δϕ_1 at the output of the integration means 7. Said integration means 7 advantageously comprise an RC-circuit which is easy to implement with very high signal frequencies.

The elements of Figure 4 designated with the reference numerals 2a, 2b will be explained later and do not affect the routing of the phase difference information from the output of the phase detection means 1a, 1b to the integration means 7. A combinatoric network 4 is provided for selecting one of the first phase difference information and the second phase difference information to be output to said integration means 7. The function of said combinatoric network 4 is explained in detail further below.

The first phase difference voltage U_Δϕ_1 can attain values ranging from 0 V to U_M. A first phase difference voltage U__Δϕ_1 of 0 V denotes a state in which each of said N bits b_1, .., b_1+N-1 has the same phase difference between the digital signal dat and the clock signal clk, wherein the digital signal dat precedes the clock signal clk. In turn, with a first phase difference voltage U_Δϕ_1 value of U_M, the clock signal clk preceding the digital signal dat is indicated. Intermediate values of the first phase difference voltage U_Δϕ_1 correspondingly represent states with other phase differences within said first calculation cycle.

After said N subsequent bits b_1, .., b_1+N-1, the combinatoric network 4 is triggered by a phase difference information selection signal, that causes the second phase difference information, which has been obtained in step 120 of Figure 5, to be output to said integration means 7, which defines a second calculation cycle. Before that, said integration means 7 may be reset.

In said second calculation cycle that is represented by step 121 of Figure 5, N further subsequent bits b_1+m, .., b_1+m+N-1 of said digital signal dat are integrated which results in a second phase difference voltage U_Δϕ_2 at the output of the integration means 7.

Both phase difference voltages U_Δϕ_1 and U_Δϕ_ 2 are stored within computation means 8, wherein said first phase difference voltage U_Δϕ_1 is stored after the first integration cycle and the second phase difference voltage U_Δϕ_2 is stored after the second integration cycle. As already mentioned, said integration means 7 can be reset before said second calculation cycle.

After the second integration cycle, said computation means 8 determine an eye width voltage U_w_eye within step 130' of Figure 5 by subtracting the first phase difference voltage U_Δϕ_1 from the second phase difference voltage U_Δϕ_2. The eye width voltage U_w_eye is proportional to the eye width T_eye, which is thereby accordingly obtained within step 130, cf. Figure 1, 5. Therefore, the eye width voltage U_w_eye can be used to assess the eye opening and hence the signal quality of said digital signal dat.

According to a variant of the invention, it is not necessary to perform the aforementioned subtraction of said phase difference voltages U_Δϕ_1 and U_Δϕ_2, because the information obtained by said subtraction can also be obtained by not resetting said integration means 7 after said first calculation cycle which leads to an aggregation of said phase difference information items of both said first and said second phase difference information.

To reduce the bit error rate within the receiver 25 of Figure 3, a variant of the invention provides controlling the eye width T_eye. This is achieved by monitoring the eye width T_eye and by systematically adjusting a phase of said clock signal clk with respect to said digital signal dat so as to minimize a phase difference between said digital signal dat and said clock signal clk. Said adjustment is represented by step 200 of Figure 5.

The adjustment of the phase of said clock signal clk is performed by supplying phase adjustment means 6 (Figure 4) with a corresponding phase adjustment value. The control of the eye width T_eye can be performed by said computation means 8, which in this case can also provide said phase adjustment means 6 with the phase adjustment value.

A further embodiment of the invention includes using said eye width T_eye for controlling transmission control means 22, which controllably influence electrical and/or optical characteristics of the transmission line 30. As can be gathered from Figure 3, the transmission control means 22 are controlled by the eye monitor 20 via a control line 21.

More precisely, the transmission control means 22 are controlled by the computation means 8 (Figure 4) of the eye monitor 20.

The transmission control means 22 may comprise polarisation mode dispersion (PMD)- mitigation means that can alter the optical characteristics of the transmission line 30 so as to increase the eye width T_eye which results in a decreased bit error rate.

A further advantageous variant of the present invention enables deriving information on time jitter of said digital signal dat or said clock signal clk, respectively. This is achieved by analysing a relation between the eye width T_eye and the phase difference between said clock signal clk and said digital signal dat. From the gradient of said eye width T_eye with respect to the phase difference, a measure for the time jitter of said signal(s) dat, clk can be derived. Said gradient can be obtained by changing the phase difference with said phase adjustment means 6 (Figure 4), storing the corresponding eye width values and by calculating the gradient hereafter.

Yet a further variant of the invention provides delay means 2a, 2b, which controllably delay said first and/or said second phase difference information, preferably by a multiple of said bit time T_bit. This is desirable when processing said first and said second phase difference information at the same time.

A decision gate 3 which is supplied with said clock signal clk and said data signal dat outputs a bit value of said digital signal dat to said combinatoric network 4. The information of said bit value can e.g. be used for verifying phase information obtained by said phase detection means 1a, 1b.

## Claims

1. Method of determining an eye width of an eye diagram of a digital signal (dat), including the following steps:
- obtaining (110) a first phase difference information corresponding to a first phase difference between said digital signal (dat) and a clock signal (clk) associated to said digital signal (dat), wherein said first phase difference is measured between said digital signal (dat) and a rising edge (clk_re) of said clock signal (clk), said rising edge (clk_re) corresponding to a start of a bit time (T_bit),
- obtaining (120) a second phase difference information corresponding to a second phase difference between said digital signal (dat) and said clock signal (clk), wherein said second phase difference is measured between said digital signal (dat) and a falling edge (clk_fe) of said clock signal (clk), said falling edge (clk_fe) corresponding to an end of said bit time (T_bit)
- determining (130) an eye width (T_eye) based on said first phase difference information and said second phase difference information.

2. Method according to claim 1, **characterized by** the following steps:
- integrating (111) in a first calculation cycle said first phase difference information of N many subsequent bits (b_1, .., b_1+N-1) of said digital signal (dat) to obtain a first phase difference voltage (U_Δϕ_1), and, after said first calculation cycle,
- integrating (121) in a second calculation cycle said second phase difference information of N further subsequent bits (b_1+m, .., b_1+m+N-1) of said digital signal (dat) to obtain a second phase difference voltage (U_Δϕ_2).

3. Method according to claim 2, **characterized by** determining (130') an eye width voltage (U_w_eye) based on said first phase difference voltage (U_Δϕ_1) and on said second phase difference voltage (U_Δϕ_2), in particular based on a difference between said first phase difference voltage (U_Δϕ_1) and said second phase difference voltage (U_Δϕ_2), said eye width voltage (U_w_eye) corresponding to said eye width (T_eye) of said eye diagram.

4. Method according to one of the preceding claims, **characterised in that** said digital signal (dat) is transmitted via an electrical or/and optical transmission line or via a radio link.

5. Method according to one of the preceding claims
**characterized in that** said first phase difference information and/or said second phase difference information are controllably delayed, preferably by a multiple of a/said bit time (T_bit).

6. Method according to one of the preceding claims **characterized in that** said first phase difference information and/or said second phase difference information and/or a bit value information, which is preferably obtained by a decision gate, and/or a phase difference information selection signal are combined, preferably by means of a combinatoric network (4) according to a predefined scheme, and **in that** an output of said combinatoric network is integrated in said first and/or said second calculation cycle.

7. Method of controlling an eye width (T_eye) of an eye diagram of a digital signal (dat), comprising a method of determining said eye diagram according to one of the preceding claims and comprising a step of adjusting (200) a phase of said clock signal (clk), said adjustment of said phase of said clock signal (clk) depending on said eye width (T_eye).

8. Method according to claim 7, **characterized in that** said eye width (T_eye) is used by computation means (8) that control phase adjustment means (6), preferably electronic phase adjustment means (6), for said adjustment.

9. Method according to claim 7 or 8, **characterized by** using said eye width (T_eye) for controlling transmission control means (22), such as polarization mode dispersion (PMD)-mitigation means (22) and the like, which controllably influence electrical and/or optical characteristics of an electrical/optical transmission line (30) that is used for transmitting said digital signal (dat).

10. Method according to one of the claims 7 to 9, **characterized by** maximizing said eye width (T_eye).

11. Method according to one of the claims 7 to 10, **characterized by** deriving time jitter information of said digital signal (dat) by means of
- analysing a relation between said eye width (T_eye) and a phase difference between said clock signal (clk) and said digital signal (dat), and
- obtaining time jitter information from a gradient of said eye width (T_eye) with respect to said phase difference and/or from said eye width (T_eye) .

12. Eye monitor (20) for determining an eye width of an eye diagram of a digital signal (dat), including :
- phase detection means (1a, 1b) for obtaining a first phase difference information and a second phase difference information between said digital signal (dat) and a clock signal (clk) associated to said digital signal (dat), wherein said first phase difference is measured between said digital signal (dat) and a rising edge (clk_re) of said clock signal (clk), said rising edge (clk_re) corresponding to a start of a bit time (T_bit), and wherein said second phase difference is measured between said digital signal (dat) and a falling edge (clk_fe) of said clock signal (clk), said falling edge (clk_fe) corresponding to an end of said bit time (T_bit),
- integration means (7) for integrating said first phase difference information and said second phase difference information to obtain a first phase difference voltage (U_Δϕ_1) and a second phase difference voltage (U_Δϕ_2),
- computation means (8) for determining an eye width voltage (U_w_eye) based on said first phase difference voltage (U_Δϕ_1) and on said second phase difference voltage (U_Δϕ_2), in particular based on a difference between said first phase difference voltage (U_Δϕ_1) and said second phase difference voltage (U_Δϕ_2), said eye width voltage (U_w_eye) corresponding to an eye width (T_eye) of said eye diagram.

13. Eye monitor (20) according to claim 12, further comprising phase adjustment means (6) for adjusting a phase of said clock signal (clk).

14. Receiver (25) for receiving a digital signal (dat), **characterized by** being adapted to perform a method according to one of the claims 1 to 11.

15. Receiver (25) according to claim 14, **characterized by** comprising an eye monitor (20) according to one of the claims 12 or 13.

## Patentansprüche

1. Verfahren zur Ermittlung der Augenbreite eines Augenmusters eines digitalen Signals (dat), das die folgenden Schritte umfasst:
- Ermittlung (110) einer ersten Phasendifferenz-Information, die einer ersten Phasendifferenz zwischen dem genannten digitalen Signal (dat) und einem Taktsignal (clk), das dem genannten digitalen Signal zugeordnet ist, entspricht, wobei die genannte erste Phasendifferenz zwischen dem genannten digitalen Signal (dat) und einer ansteigenden Flanke (clk_re) des genannten Taktsignals (clk) gemessen wird, wobei die genannte ansteigende Flanke (clk_re) dem Start eines Bittaktes (T_bit) entspricht,
- Ermittlung (120) einer zweiten Phasendifferenz-Information, die einer zweiten Phasendifferenz zwischen dem genannten digitalen Signal (dat) und dem genannten Taktsignal (clk) entspricht, wobei die genannte zweite Phasendifferenz zwischen dem genannten digitalen Signal (dat) und einer abfallenden Flanke (clk_fe) des genannten Taktsignals (clk) gemessen wird, wobei die genannte abfallende Flanke (clk_fe) einem Ende des genannten Bittaktes (T_bit) entspricht,
- Ermittlung (130) der Augenbreite (T_eye) auf der Basis der genannten ersten Phasendifferenz-Information und der genannten zweiten Phasendifferenz-Information.

2. Verfahren gemäß Anspruch 1, das durch die folgenden Schritte **gekennzeichnet** ist:
- Integration (111) der genannten ersten Phasendifferenz-Information aus N aufeinander folgenden Bits (b_1, ..., b_1+n-1) des genannten digitalen Signals (dat) in einem ersten Berechnungszyklus, um eine erste Phasendifferenz-Spannung (U_Δϕ_1) zu erhalten, und nach dem genannten ersten Berechnungszyklus
- Integration (121) der genannten zweiten Phasendifferenz-Information aus N weiteren, aufeinander folgenden Bits (b_1+m, ..., b_1+m+N-1) des genannten digitalen Signals (dat) in einem zweiten Berechnungszyklus, um eine zweite Phasendifferenz-Spannung (U_Δϕ_2) zu erhalten.

3. Verfahren gemäß Anspruch 2, **gekennzeichnet durch** die Ermittlung (130') einer Augenbreiten-Spannung (U_w_eye) basierend auf der genannten ersten Phasendifferenz-Spannung (U_Δϕ_1) und auf der genannten zweiten Phasendifferenz-Spannung (U_Δϕ_2), insbesondere auf der Basis einer Differenz zwischen der genannten ersten Phasendifferenz-Spannung (U_Δϕ_1) und der genannten zweiten Phasendifferenz-Spannung (U_Δϕ_2), wobei die genannte Augenbreiten-Spannung (U_w_eye) der genannten Augenbreite (T_eye) des genannten Augenmusters entspricht.

4. Verfahren gemäß einem der vorgenannten Ansprüche, **dadurch gekennzeichnet, dass** das genannte digitale Signal (dat) über eine elektrische und/oder optische Übertragungsleitung oder über eine Funkverbindung übertragen wird.

5. Verfahren gemäß einem der vorgenannten Ansprüche, **dadurch gekennzeichnet, dass** die genannte ersten Phasendifferenz-Information und/oder die genannte zweite Phasendifferenz-Information steuerbar verzögert werden, vorzugsweise um ein Vielfaches des genannten Bittaktes (T_bit).

6. Verfahren gemäß einem der vorgenannten Ansprüche, **dadurch gekennzeichnet, dass** die genannte erste Phasendifferenz-Information und/oder die genannte zweite Phasendifferenz-Information und/oder eine Bitwert-Information, die vorzugsweise über ein Verknüpfungsglied ermittelt wird, und/oder ein Auswahlsignal für die Phasendifferenz-Information kombiniert werden, vorzugsweise mit Hilfe eines Schaltnetzes (4), gemäß einem vordefinierten Schema, sowie dadurch, dass ein Ausgang des genannten Schaltnetzes in den genannten ersten und/oder zweiten Berechnungszyklus integriert ist.

7. Verfahren zur Steuerung der Augenbreite (T_eye) eines Augenmusters eines digitalen Signals (dat), das ein Verfahren zur Augenmuatermessung gemäß einem der vorgenannten Ansprüche sowie einen Schritt zur Anpassung (200) einer Phase des genannten Taktsignals (clk) umfasst, wobei die genannte Anpassung der genannten Phase des genannten Taktsignals (clk) von der genannten Augenbreite (T_eye) abhängig ist.

8. Verfahren gemäß Anspruch 7, **dadurch gekennzeichnet, dass** die genannte Augenbreite (T_eye) von der Berechnungsvorrichtung (8), die die Vorrichtung zur Phasenanpassung (6) steuert, vorzugsweise eine elektronische Vorrichtung zur Phasenanpassung (6), für die genannte Anpassung verwendet wird.

9. Verfahren gemäß Anspruch 7 oder 8, **gekennzeichnet durch** die Verwendung der genannten Augenbreite (T_eye) zur Steuerung der Vorrichtung zur Übertragungssteuerung (22), beispielsweise einer Vorrichtung zur Dämpfung der polarisationsmodus-Dispersion (PMD) (22) und Ähnlichem, die die elektrischen und/oder optischen Eigenschaften einer elektrisch/optischen Übertragungsleitung (30), die zur Übertragung des genannten digitalen Signals (dat) genutzt wird, steuerbar beeinflusst.

10. Verfahren gemäß einem der Ansprüche 7 bis 9, **gekennzeichnet durch** die Maximierung der genannten Augenbreite (T_eye).

11. Verfahren gemäß einem der Ansprüche 7 bis 10, **gekennzeichnet durch** die Ableitung der Zeitjitter-Information des genannten digitalen Signals (dat) mittels:
- Analyse der Beziehung zwischen der genannten Augenbreite (T_eye) und einer Phasendifferenz zwischen dem genannten Taktsignal (clk) und dem genannten digitalen Signal (dat), und
- Ermittlung der Zeitjitter-Information von einem Gradienten der genannten Augenbreite (T_eye) in Bezug auf die genannte Phasendifferenz und/oder aus der genannten Augenbreite (T_eye).

12. Augenmonitor (20) zur Ermittlung der Augenbreite eines Augenmusters eines digitalen Signals (dat), der Folgendes umfasst:
- Vorrichtungen zur Phasenerfassung (1a, 1b) zur Ermittlung einer ersten Phasendifferenz-Information und einer zweiten Phasendifferenz-Information zwischen dem genannten digitalen Signal (dat) und einem Taktsignal (clk), das dem genannten digitalen Signal (dat) zugeordnet ist, wobei die erste Phasendifferenz zwischen dem genannten digitalen Signal (dat) und einer ansteigenden Flanke (clk_re) des genannten Taktsignals (clk) gemessen wird, wobei die genannte ansteigende Flanke (clk_re) dem Start eines Bittaktes (T_bit) entspricht, und wobei die genannte zweite Phasendifferenz zwischen dem genannten digitalen Signal (dat) und einer abfallenden Flanke (clk_fe) des genannten Taktsignals (clk) gemessen wird, wobei die genannte abfallende Flanke (clk_fe) dem Ende des genannten Bittaktes (T_bit) entspricht,
- Vorrichtungen zur Integration (7) der genannten ersten Phasendifferenz-Information und der genannten zweiten Phasendifferenz-Information, um eine erste Phasendifferenz-Spannung (U_Δϕ_1) und eine zweite Phasendifferenz-Spannung (U_Δϕ_2 ) zu erhalten,
- Berechnungsvorrichtungen (8) zur Berechnung einer Augenbreiten-Spannung (U_w_eye) auf der Basis der genannten ersten Phasendifferenz-Spannung (U_Δϕ_1) und der genannten zweiten Phasendifferenz-Spannung (U_Δϕ_2) , insbesondere auf der Basis einer Differenz zwischen der genannten ersten Phasendifferenz-Spannung (U_Δϕ_1) und der genannten zweiten Phasendifferenz-Spannung (U_Δϕ_2), wobei die genannte Augenbreiten-Spannung (U_w_eye) einer Augenbreite (T_eye) des genannten Augenmusters entspricht.

13. Augenmonitor (20) gemäß Anspruch 12, der außerdem Vorrichtungen zur Phasenanpassung (6) zur Anpassung einer Phase des genannten Taktsignals (clk) umfasst.

14. Empfänger (25) zum Empfang eines digitalen Signals (dat), **dadurch gekennzeichnet, dass** er entsprechend angepasst ist, um ein Verfahren gemäß einem der Ansprüche 1 bis 11 auszuführen.

15. Empfänger (25) gemäß Anspruch 14, **dadurch gekennzeichnet, dass** er einen Augenmonitor (20) gemäß einem der Ansprüche 12 oder 13 umfasst.

## Revendications

1. Procédé pour déterminer une largeur de bord d'un diagramme en oeil d'un signal numérique (dat) comprenant les étapes suivantes :
- collecte (110) d'une première information de différence de phase correspondant à une première différence de phase entre ledit signal numérique (dat) et un signal d'horloge (clk) associé audit signal numérique (dat), ladite différence de phase étant mesurée entre ledit signal numérique (dat) et un front montant (clk_re) dudit signal d'horloge (clk), ledit front montant (clk_re) correspondant à un début d'une durée de bit (T_bit),
- collecte (120 d'une deuxième information de différence de phase correspondant à une deuxième différence de phase entre ledit signal numérique (dat) et ledit signal d'horloge (clk), ladite deuxième différence de phase étant mesurée entre ledit signal numérique (dat) et un front descendant (clk_fe) dudit signal d'horloge (clk), ledit front descendant (clk_fe) correspondant à une fin de ladite durée de bit (T_bit),
- détermination (130) d'une largeur d'oeil (T_oeil) en se basant sur ladite première information de différence de phase et ladite deuxième information de différence de phase.

2. Procédé selon la revendication 1, **caractérisé par** les étapes suivantes :
- intégration (111) dans un premier cycle de calcul de ladite première information de différence de phase de N bits successifs (b_1 , ..., b_1+N-1) dudit signal numérique (dat) afin d'obtenir une première tension de différence de phase (U_Δϕ_1) et, après ledit premier cycle de calcul,
- intégration (121) dans un deuxième cycle de calcul de ladite information de différence de phase de N bits successifs supplémentaires (b _1 +m, ..., b_1+m+N-1) dudit signal numérique (dat) pour obtenir une deuxième tension de différence de phase (U_Δϕ_2).

3. Procédé selon la revendication 2, **caractérisé par** la détermination (130) d'une tension de largeur d'oeil (U_w_oeil) en se basant sur ladite première tension de différence de phase (U_Δϕ_1) et sur ladite deuxième tension de différence de phase (U_Δϕ_2), notamment en se basant sur une différence entre ladite première tension de différence de phase (U_Δϕ_1) et ladite deuxième tension de différence de phase (U_Δϕ_2), ladite tension de largeur d'oeil (U_w_oeil) correspondant à ladite largeur d'oeil (T_oeil) dudit diagramme en oeil.

4. Procédé selon l'une des revendications précédentes, **caractérisé en ce que** ledit signal numérique (dat) est transmis par le biais d'une liaison de transmission électrique et/ou optique ou par le biais d'une liaison radioélectrique.

5. Procédé selon l'une des revendications précédentes, **caractérisé en ce que** ladite première information de différence de phase et/ou ladite deuxième information de différence de phase sont retardées de manière contrôlable, de préférence par un multiple de ladite/d'une durée de bit (T_bit).

6. Procédé selon l'une des revendications précédentes, **caractérisé en ce que** ladite première information de différence de phase et/ou ladite deuxième information de différence de phase et/ou une information de valeur binaire, laquelle est de préférence obtenue par une porte de décision, et/ou un signal de sélection d'information de différence de phase sont combinés, de préférence au moyen d'un réseau combinatoire (4) selon un modèle prédéfini, et **en ce qu'**une sortie dudit réseau combinatoire est intégrée dans ledit premier et/ou ledit deuxième cycle de calcul.

7. Procédé de commande d'une largeur d'oeil (T_oeil) d'un diagramme en oeil d'un signal numérique (dat), comprenant un procédé e détermination dudit diagramme en oeil selon l'une des revendications précédentes et comprenant une étape de réglage (200) d'une phase dudit signal d'horloge (clk), ledit réglage de ladite phase dudit signal d'horloge (clk) dépendant de ladite largeur d'oeil (T_oeil),

8. Procédé selon la revendication 7, **caractérisé en ce que** ladite largeur d'oeil (T_oeil) est utilisée par des moyens de calcul (8) qui commandent des moyens de réglage de la phase (6), de préférence des moyens de réglage de la phase électroniques (6), pour ledit réglage.

9. Procédé selon la revendication 7 ou 8, **caractérisé par** l'utilisation de ladite largeur d'oeil (T_oeil) pour commander des moyens de commande de la transmission (22) tels que des moyens d'atténuation PMD (Polarization Mode Dispersion - dispersion du mode de polarisation) (22) et similaires qui influencent de manière contrôlable les caractéristiques électriques et/ou optiques d'une ligne de transmission électrique/optique (30) qui est utilisée pour transmettre ledit signal numérique (dat).

10. Procédé selon l'une des revendications 7 à 9, **caractérisé par** l'accroissement au maximum de ladite largeur d'oeil (T_oeil),

11. Procédé selon l'une des revendications 7 à 10, **caractérisé par** la dérivation d'informations de gigue dans le temps dudit signal numérique (dat) par
- analyse d'une relation entre ladite largeur d'oeil (T_oeil) et une différence de phase entre ledit signal d'horloge (clk) et ledit signal numérique (dat) et
- collecte d'une information de gigue dans le temps à partir d'un gradient de ladite largeur d'oeil (T_oeil) en considération de ladite différence de phase et/ou de ladite largeur d'oeil (T_oeil).

12. Moniteur d'oeil (20) pour déterminer une largeur d'oeil d'un diagramme en oeil d'un signal numérique (dat) comprenant :
- des moyens de détection de phase (1a, 1b) pour obtenir une première information de différence de phase et une deuxième information de différence de phase entre ledit signal numérique (dat) et un signal d'horloge (clk) associé avec ledit signal numérique (dat), ladite différence de phase étant mesurée entre ledit signal numérique (dat) et un front montant (clk_re) dudit signal d'horloge (clk), ledit front montant (clk_re) correspondant à un début d'une durée de bit (T_bit), et ladite deuxième différence de phase étant mesurée entre ledit signal numérique (dat) et un front descendant (clk_fe) dudit signal d'horloge (clk), ledit front descendant (clk_fe) correspondant à une fin de ladite durée de bit (T_bit),
- des moyens d'intégration (7) pour intégrer ladite première information de différence de phase et ladite deuxième information de différence de phase afin d'obtenir une première tension de différence de phase (U_Δϕ_1) et une deuxième tension de différence de phase (U_Δϕ_2),
- des moyens de calcul (8) pour déterminer une tension de largeur d'oeil (U_w_oeil) en se basant sur ladite première tension de différence de phase (U_Δϕ_1) et sur ladite deuxième tension de différence de phase (U_Δϕ_2), notamment en se basant sur une différence entre ladite première tension de différence de phase (U_Δϕ_1) et ladite deuxième tension de différence de phase (U_Δϕ_2), ladite tension de largeur d'oeil (U_w_oeil) correspondant à ladite largeur d'oeil (T_oeil) dudit diagramme en oeil.

13. Moniteur d'oeil (20) selon la revendication 12, comprenant en plus des moyens de réglage de la phase (6) pour régler une phase dudit signal d'horloge (clk).

14. Récepteur (25) pour recevoir un signal numérique (dat), **caractérisé en ce qu'**il est conçu pour mettre en oeuvre un procédé selon l'une des revendications 1 à 11.

15. Récepteur (25) selon la revendication 14, **caractérisé en ce qu'**il comprend un moniteur d'oeil (20) selon l'une des revendications 12 ou 13.
